# EUROPEAN PATENT SPECIFICATION

(11) **EP 4 261 479 B1**
(45) Date of publication and mention of the grant of the patent: **08.07.2026**
(21) Application number: 21809818.4
(22) Date of filing: 19.05.2021
(51) Int. Cl.: F25B 41/31, F25B 49/02, F16K 11/07, F16K 31/06, F25B 41/35, F25B 25/00, F25B 39/02, F25B 5/02

(54) **ELECTRONIC EXPANSION VALVE AND THERMAL MANAGEMENT ASSEMBLY**
ELEKTRONISCHES EXPANSIONSVENTIL UND WÄRMEVERWALTUNGSANORDNUNG
DÉTENDEUR ÉLECTRONIQUE ET ENSEMBLE DE GESTION THERMIQUE

(30) Priority: 19.05.2020 CN 202010425555
(43) Date of publication of application: 18.10.2023
(73) Proprietor: Valeo Automotive Air Conditioning Hubei Co., Ltd., Jingzhou, Hubei 434007 (CN)
(72) Inventor: WAN, Xuanchen, Jingzhou, Hubei 434007 (CN); LI, Qing, Jingzhou, Hubei 434007 (CN); ZHANG, Junxin, Jingzhou, Hubei 434007 (CN)
(74) Representative: Valeo Powertrain Systems
(86) International application number: PCT/CN2021/094544
(87) International publication number: WO 2021/233326

(56) References cited:
- EP-A1- 3 623 673
- CN-A- 108 869 830
- CN-A- 110 735 958
- CN-A- 110 953 390
- CN-U- 208 967 181
- CN-U- 208 968 103
- CN-U- 212 692 177
- CN-U- 212 746 975
- CN-U- 213 335 059
- CN-U- 213 335 060
- KR-A- 20190 009 053

## Description

### FIELD OF THE INVENTION

The present invention relates to an electronic expansion valve and a thermal management assembly.

### BACKGROUND

A conventional air conditioning system comprises four major elements: a compressor, an evaporator, a condenser and a throttle device. Depending on the requirements of the air conditioning system, the throttle device may comprise an expansion valve and a capillary tube. Expansion valves can be categorized as thermal expansion valves or electronic expansion valves, depending on the drive mechanism. Electronic expansion valves can be categorized as electromagnetically driven electronic expansion valves or motor-driven electronic expansion valves, depending on the way in which they are driven.

Motor vehicle air conditioning systems comprise the four major elements mentioned above, and generally use an expansion valve as the throttle device. Chinese patent application CN101551174A has disclosed a motor vehicle air conditioning system that uses a thermal expansion valve as the throttle device. In other prior art, electronic expansion valves are also used as throttle devices in motor vehicle air conditioning systems.

As the automotive industry develops toward electrification, motor vehicles using a drive battery as a drive source are also becoming more and more common. In the process of charging and discharging, drive batteries generate heat, causing the battery temperature to rise. It is known from the technical solution disclosed in Chinese patent application CN101551174A that battery temperature can be kept stable by providing a refrigerant branch for battery cooling in the motor vehicle air conditioning system. An electronic expansion valve can be provided on the refrigerant branch, to realize the refrigerant throttling process.

An electronic expansion valve in the prior art comprises a valve body, a valve assembly, a sensor and an electronic control board. The stability of installation of the sensor of the electronic expansion valve in the prior art is not optimal.

Expansion valves according to the prior art are shown by document EP 3 623 673 Al, which discloses the features of the preamble of appended independent claim 1, and by document CN 208 967 181 U.

### SUMMARY

An objective of the present invention is to provide an electronic expansion valve having the advantage of stable installation of the refrigerant sensor.

Another objective of the present invention is to provide a thermal management assembly comprising the electronic expansion valve.

An electronic expansion valve for achieving the objective comprises: a valve body, the valve body having a first refrigerant inlet, a first refrigerant outlet, a second refrigerant inlet and a second refrigerant outlet, wherein a first refrigerant channel is formed between the first refrigerant inlet and the first refrigerant outlet, and a second refrigerant channel is formed between the second refrigerant inlet and the second refrigerant outlet;
a valve assembly, for throttling refrigerant in the first refrigerant channel; a refrigerant sensor, for testing refrigerant in the second refrigerant channel; and a main electronic control board, electrically connected to the valve assembly and the refrigerant sensor separately; the electronic expansion valve further comprises: a housing assembly, comprising a main housing, the main housing having a main control cavity, the main electronic control board being disposed in the main control cavity, and the refrigerant sensor being pressed tightly onto the housing assembly.

In an embodiment of the present invention, the refrigerant sensor, the main housing and the valve body are stacked, and connected together in the stacking direction, wherein one of the main housing and the refrigerant sensor is clamped between the valve body and the other of the main housing and the refrigerant sensor.

In an embodiment of the present invention, the electronic expansion valve further comprises a sensor connecting element; and the stacked refrigerant sensor, main housing and valve body are connected together by means of the sensor connecting element.

In an embodiment of the present invention, the main housing has a sensor hole, the sensor hole being in communication with the main control cavity, and the refrigerant sensor passing through the sensor hole, wherein part of the refrigerant sensor is located in the main control cavity and electrically connected to the main electronic control board; and another part of the refrigerant sensor is located outside the main control cavity, and used to test refrigerant in the second refrigerant channel.

In an embodiment of the present invention, the part of the refrigerant sensor that is located in the main control cavity is pressed tightly onto the main housing.

In an embodiment of the present invention, the housing assembly further comprises a secondary housing, the secondary housing being removably connected to the main housing; the refrigerant sensor, the secondary housing and the valve body are stacked, and connected together in the stacking direction, wherein one of the secondary housing and the refrigerant sensor is clamped between the valve body and the other of the secondary housing and the refrigerant sensor.

In an embodiment of the present invention, the electronic expansion valve further comprises a sensor connecting element; and the stacked refrigerant sensor, secondary housing and valve body are connected together by means of the sensor connecting element.

In an embodiment of the present invention, the secondary housing has a secondary control cavity and a sensor hole, the sensor hole being in communication with the secondary control cavity, and the refrigerant sensor passing through the sensor hole, wherein part of the refrigerant sensor is located in the secondary control cavity and electrically connected to the main electronic control board; and another part of the refrigerant sensor is located outside the secondary control cavity, and used to test refrigerant in the second refrigerant channel.

In an embodiment of the present invention, the secondary housing further has a secondary connecting opening, the secondary connecting opening being in communication with the secondary control cavity; and the main housing has a main connecting opening, the main connecting opening being in communication with the main control cavity; the secondary connecting opening is configured to be in communication with the main connecting opening, such that the secondary control cavity is in communication with the main control cavity.

A thermal management assembly for achieving the objective comprises a heat exchanger, the heat exchanger having a first heat exchange channel and a second heat exchange channel, the first heat exchange channel and the second heat exchange channel not being in communication with each other; the thermal management assembly further comprises the electronic expansion valve as described above, the electronic expansion valve being mounted on the heat exchanger, wherein the electronic expansion valve is in communication with the first heat exchange channel.

The positive and progressive effects of the present invention are as follows: Because the refrigerant sensor is pressed tightly onto the housing assembly, the refrigerant sensor has greater stability after being mounted on the electronic expansion valve, and is not likely to loosen. The electronic expansion valve provided in the present invention has the advantage of stable installation of the refrigerant sensor. The thermal management assembly provided in the present invention comprises the electronic expansion valve.

### BRIEF DESCRIPTION OF THE DRAWINGS

The above and other features, properties and advantages of the present invention will become more obvious through the following description in conjunction with the drawings and embodiments, wherein:
Fig. 1 is a schematic diagram of a motor vehicle air conditioning system.
Figs. 2A - 2D are schematic drawings of the electronic expansion valve in a first embodiment of the present invention.
Fig. 3 is an exploded drawing of the electronic expansion valve in the first embodiment of the present invention.
Fig. 4 is a sectional view in direction A-A in Fig. 2C, wherein the dotted arrows show refrigerant flow paths.
Fig. 5 is a sectional view in direction B-B in Fig. 2D.
Fig. 6 is a sectional drawing in direction C-C in Fig. 2C.
Fig. 7 is a sectional view in direction D-D in Fig. 2D.
Figs. 8A - 8B are schematic drawings of the main housing in the first embodiment of the present invention.
Figs. 9A - 9C are schematic drawings of the valve body.
Fig. 9D is a sectional view of the valve body.
Figs. 10A - 10D are schematic drawings of the electronic expansion valve in a second embodiment of the present invention.
Fig. 11 is an exploded drawing of the electronic expansion valve in the second embodiment of the present invention.
Fig. 12 is a sectional view in direction E-E in Fig. 10C.
Fig. 13 is a sectional view in direction F-F in Fig. 10D.
Figs. 14A - 14B are schematic drawings of the main housing in the second embodiment of the present invention.
Figs. 15A - 15B are schematic drawings of the secondary housing in the second embodiment of the present invention.
Figs. 16A - 16D are schematic drawings of the electronic expansion valve in a third embodiment of the present invention.
Fig. 17 is an exploded drawing of the electronic expansion valve in the third embodiment of the present invention.
Fig. 18 is a sectional view in direction G-G in Fig. 16C.
Fig. 19 is a sectional view in direction J-J in Fig. 16D.
Fig. 20 is a sectional view in direction H-H in Fig. 16C.
Figs. 21A - 21B are schematic drawings of the main housing in the third embodiment of the present invention.
Figs. 22A - 22B are schematic drawings of the secondary housing in the third embodiment of the present invention.
Fig. 23 is a sectional view of the electronic expansion valve, showing the connection relationship of the main housing, sensor and valve body, wherein the opening of the main housing is facing away from the valve body.
Fig. 24 is a sectional view of the electronic expansion valve, showing the connection relationship of the main housing, sensor and valve body, wherein the opening of the main housing is facing toward the valve body.
Fig. 25 is a sectional view of the sensor.

### DETAILED DESCRIPTION

Several different embodiments or practical examples of the implemented technical solution of the subject matter are disclosed below. To simplify the disclosed content, specific instances of elements and arrangements are described below, but of course, these are merely examples, and do not limit the scope of protection of the present invention, which is defined by appended independent claim1. For example, the distribution of a first feature at a second feature as disclosed hereinbelow may include an embodiment in which the first and second features are distributed by direct connection, but may also include an embodiment in which an additional feature is formed between the first and second features, such that there may be no direct connection between the first and second features. In addition, in this content, reference labels and/or letters might by repeated in different examples. This repetition is aimed at brevity and clarity, and does not in itself indicate a relationship between the embodiments and/or structures to be discussed. Furthermore, when a first element is described as being connected or joined to a second element, this description includes an embodiment in which the first and second elements are directly connected or joined together, and also includes the addition of one or more other intervening elements such that the first and second elements are indirectly connected or joined together.

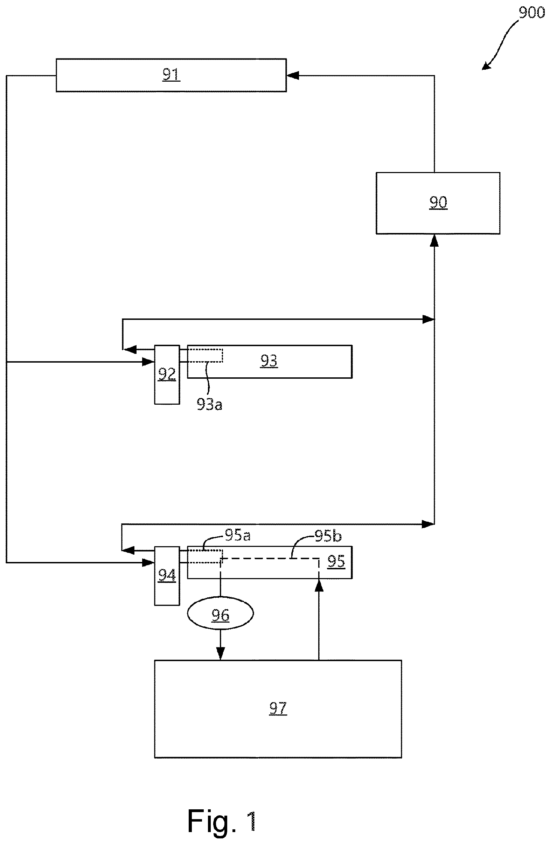

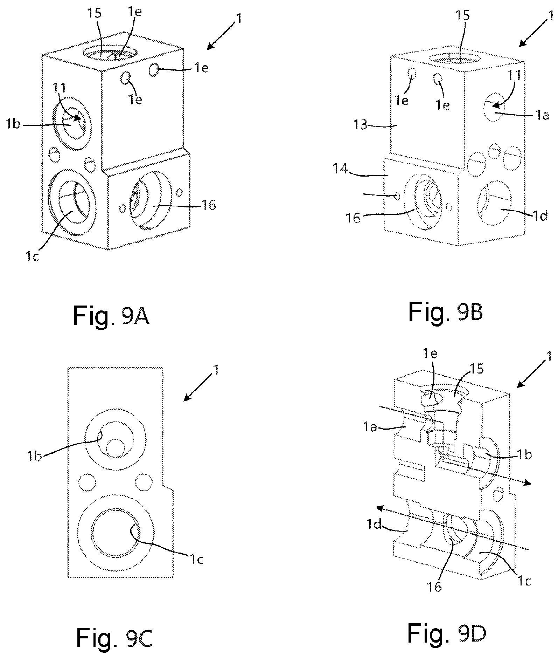

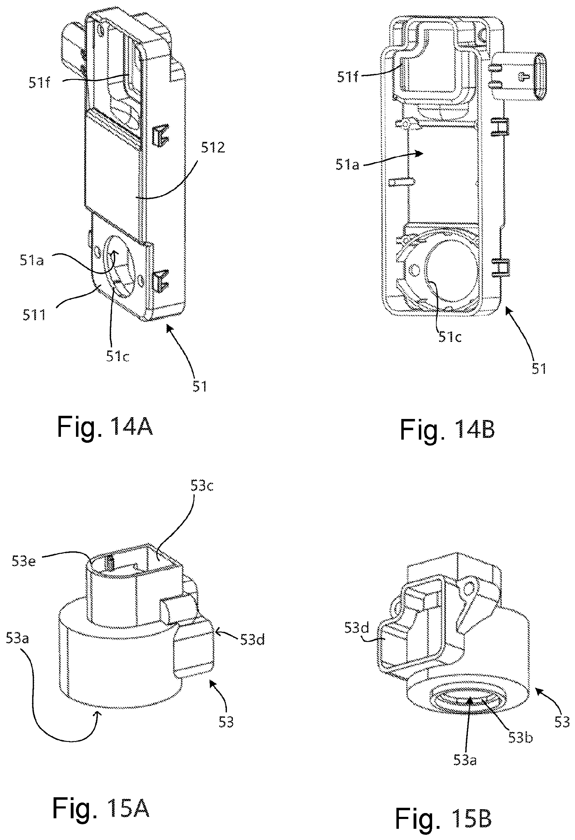

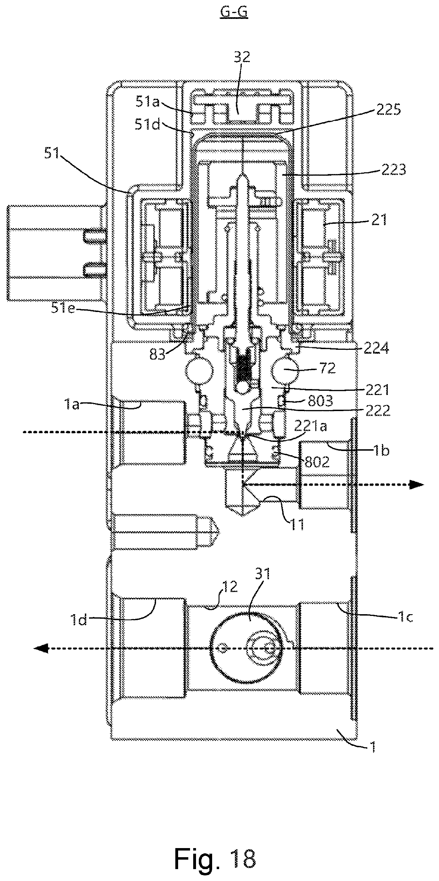

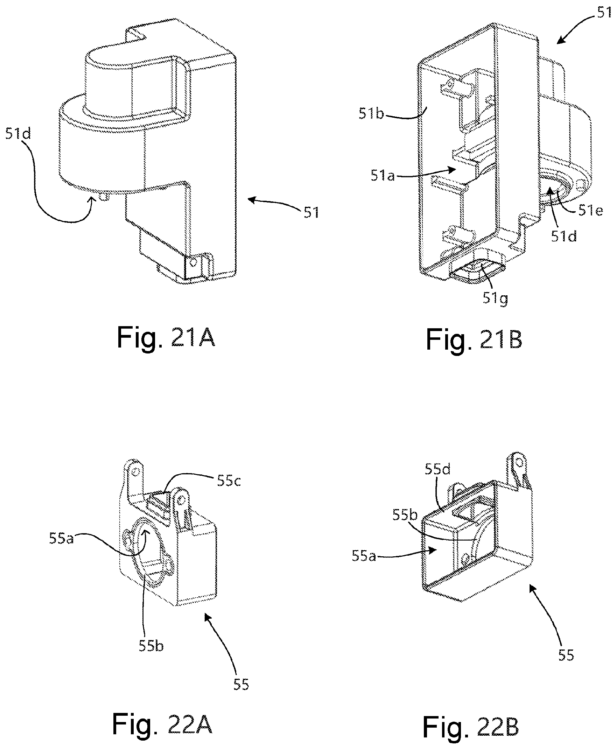

It must be noted that Figs. 1 - 25 are merely examples and are not drawn to the same scale, and should not be regarded as limiting the scope of protection actually claimed for the present invention.

Fig. 1 shows a motor vehicle air conditioning system 900 in an embodiment of the present invention. The motor vehicle air conditioning system 900 comprises a compressor 90, a condenser 91, electronic expansion valves 92, 94, an evaporator 93, a heat exchanger 95, a pump 96, a battery module 97, pipelines for refrigerant flow and pipelines for coolant flow. These pipelines connect the various parts of the motor vehicle air conditioning system 900.

The evaporator 93 and electronic expansion valve 92 form a thermal management assembly. The electronic expansion valve 92 is mounted on the evaporator 93, and forms a unit with the evaporator 93. The evaporator 93 has an evaporator channel 93a, and refrigerant flows in the evaporator channel 93a. The evaporator channel 93a is in communication with the electronic expansion valve 92.

The heat exchanger 95 and electronic expansion valve 94 form a thermal management assembly; the electronic expansion valve 94 is mounted on the heat exchanger 95, and forms a unit with the heat exchanger 95. The heat exchanger 95 has a first heat exchanger channel 95a and a second heat exchange channel 95b; the first heat exchange channel 95a and second heat exchange channel 95b are not in communication with each other. Refrigerant flows in the first heat exchange channel 95a, and coolant flows in the second heat exchange channel 95b. The first heat exchange channel 95a is in communication with the electronic expansion valve 94, and the second heat exchange channel 95b is in communication with a circuit in which the pump 96 and the battery module 97 are disposed.

During operation of the motor vehicle air conditioning system 900, heat generated by the battery module 97 is carried away by coolant, and enters the second heat exchange channel 95b of the heat exchanger 95 together with the coolant. Refrigerant flows out of the electronic expansion valve 94 after being throttled by the electronic expansion valve 94, and enters the first heat exchange channel 95a in a low-temperature, low-pressure state. In the heat exchanger 95, heat in the coolant in the second heat exchange channel 95b is absorbed by the refrigerant in the first heat exchange channel 95a, thus enabling the motor vehicle air conditioning system 900 to realize the process of cooling the battery module 97.

Refrigerant flows out of the electronic expansion valve 92 after being throttled by the electronic expansion valve 92, and enters the evaporator channel 93a in a low-temperature, low-pressure state. The evaporator 93 allows airflow to blow past the outside of the evaporator channel 93a, to absorb heat in the airflow and thereby cool the airflow. The cooled airflow can be delivered into the vehicle cabin, to regulate a hot and damp environment in the cabin.

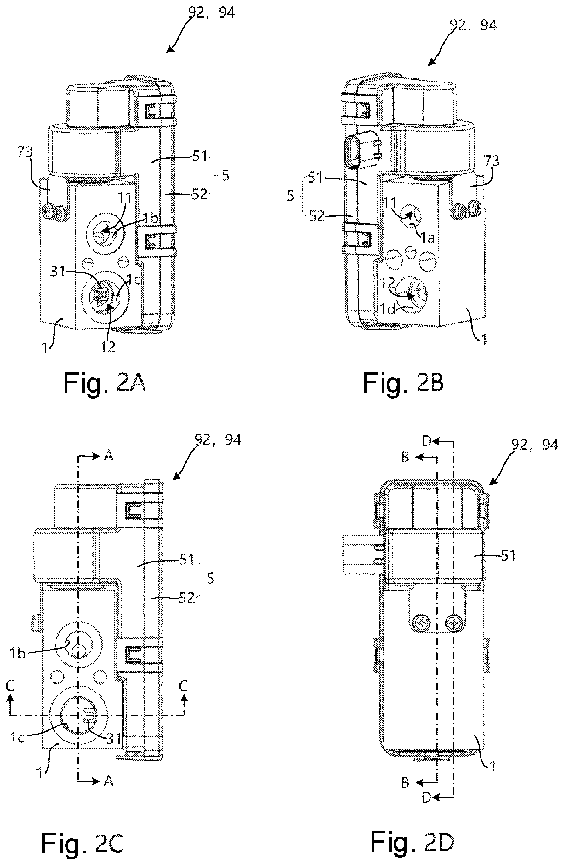

Figs. 2A - 2D and Figs. 3, 4, 5, 6, 7, 8A and 8B show a first embodiment of the electronic expansion valves 92, 94 in the present invention. In this embodiment, the electronic expansion valves 92, 94 comprise a valve body 1, a valve assembly 2, a refrigerant sensor 31, a main electronic control board 4 and a housing assembly 5.

Referring to Figs. 2A - 2D, Fig. 4 and Figs. 9A - 9D, the valve body 1 is in the form of a block, having three pairs of respectively opposite sides in space. In terms of internal structure, the valve body 1 has a first refrigerant inlet 1a and a first refrigerant outlet 1b, wherein a first refrigerant channel 11 running through the valve body 1 is formed between the first refrigerant inlet 1a and first refrigerant outlet 1b. The first refrigerant inlet 1a and first refrigerant outlet 1b are preferably disposed at two opposite sides of the valve body 1. In embodiments which are not shown, the first refrigerant inlet 1a and first refrigerant outlet 1b may also be disposed at the same side of the valve body 1, or the first refrigerant inlet 1a and first refrigerant outlet 1b may also be disposed at two adjacent sides of the valve body 1. The first refrigerant outlet 1b is in communication with an inlet of the evaporator channel 93a or an inlet of the first heat exchange channel 95a.

To enable the valve assembly 2 to throttle the refrigerant in the first refrigerant channel 11, the valve body 1 is preferably provided with a first mounting cavity 15 at a side where the first refrigerant inlet 1a and first refrigerant outlet 1b are not provided. The first mounting cavity 15 extends into the valve body 1 from an outer surface of the valve body 1, and is in communication with the first refrigerant channel 11. The valve assembly 2 is inserted into the first mounting cavity 15, and at least part of the valve assembly 2 is located in the first refrigerant channel 11, to throttle the refrigerant in the first refrigerant channel 11.

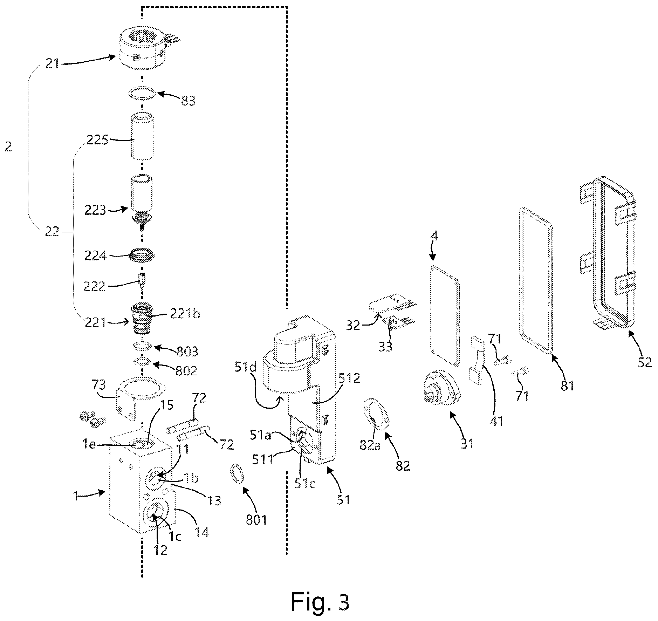

As shown in Figs. 3, 4 and 5, the valve assembly 2 comprises a coil assembly 21 and a spool assembly 22. One end of the spool assembly 22 is inserted into the first mounting cavity 15 of the valve body 1, and extends into the first refrigerant channel 11. The part of the spool assembly 22 that is inserted into the valve body 1 is fixed to the valve body 1. The other end of the spool assembly 22 is exposed outside the valve body 1. The coil assembly 21 is disposed outside the valve body 1, and surrounds the spool assembly 22. The coil assembly 21 is electrically connected to the main electronic control board 4, and when energized, the coil assembly 21 can drive the spool assembly 22 to move, so that the spool assembly 22 realizes the process of throttling the refrigerant in the first refrigerant channel 11. In an embodiment which is not shown, the valve assembly 2 may also be an electromagnetically driven valve assembly.

The spool assembly 22 comprises a valve seat 221, a spool 222, a connection seat 224, a rotor assembly 223 and a hood 225, which are fitted together along an axis of the valve assembly 2 (as shown by the dotted line in Fig. 3). The valve seat 221 has a valve hole 221a; the part of the valve seat 221 that has the valve hole 221a is disposed in the valve body 1 and located in the first refrigerant channel 11. The valve seat 221 is fixed to the valve body 1; the connection seat 224 may be welded separately to the valve body 1 and the valve seat 221. The rotor assembly 223 and the hood 225 are separately connected to the connection seat 224. The rotor assembly 223 comprises a permanent magnet, which can rotate about the axis of the valve assembly 2 under the action of an excitation magnetic field generated by the energized coil assembly 21. The rotor assembly 223 also comprises a transmission assembly that converts the rotation of the permanent magnet to movement along the axis of the valve assembly 2.

The spool 222 is slidably fitted in the valve seat 221. The permanent magnet of the rotor assembly 223 is configured to be driven by the energized coil assembly 21, and drives the spool 222 to move along the axis of the valve assembly 2 relative to the valve seat 221 by means of the transmission assembly, thereby regulating the degree of opening of the valve hole 221a. When refrigerant in the first refrigerant channel 11 passes through the valve hole 221a with a small degree of opening, the refrigerant is throttled.

To increase the degree of integration of the thermal management assembly, the valve body 1 also has a second refrigerant inlet 1c and a second refrigerant outlet 1d. A second refrigerant channel 12 running through the valve body 1 is formed between the second refrigerant inlet 1c and second refrigerant outlet 1d. The second refrigerant channel 12 is not in communication with the first refrigerant channel 11. This design allows the valve body 1 to form part of a refrigerant outlet flow path of the evaporator 93 or heat exchanger 95. In this embodiment, the second refrigerant inlet 1c is in communication with an outlet of the evaporator channel 93a or an outlet of the second heat exchange channel 95b.

The second refrigerant inlet 1c and second refrigerant outlet 1d are preferably disposed at two opposite sides of the valve body 1. In a more specific embodiment, the first refrigerant inlet 1a and second refrigerant outlet 1d are preferably disposed at the same side of the valve body 1, and the first refrigerant outlet 1b and second refrigerant inlet 1c are preferably disposed at the same side of the valve body 1. In embodiments which are not shown, the second refrigerant inlet 1c and second refrigerant outlet 1d may also be disposed at the same side of the valve body 1. or the second refrigerant inlet 1c and second refrigerant outlet 1d may also be disposed at two adjacent sides of the valve body 1.

To enable the refrigerant sensor 31 to test refrigerant in the second refrigerant channel 12, the valve body 1 is preferably provided with a second mounting cavity 16 at a side where the second refrigerant inlet 1c and second refrigerant outlet 1d are not provided. The second mounting cavity 16 extends into the valve body 1 from an outer surface of the valve body 1, and is in communication with the second refrigerant channel 12. The refrigerant sensor 31 is inserted into the second mounting cavity 16, and at least part of the refrigerant sensor 31 is located in the second refrigerant channel 12, to test refrigerant in the second refrigerant channel 12.

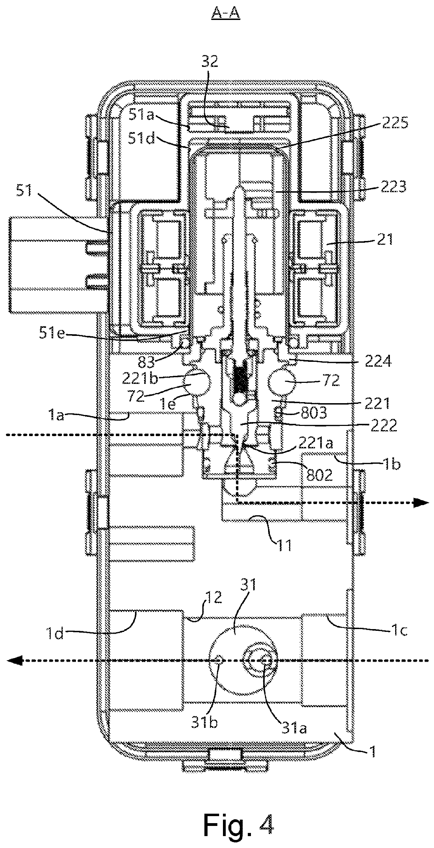

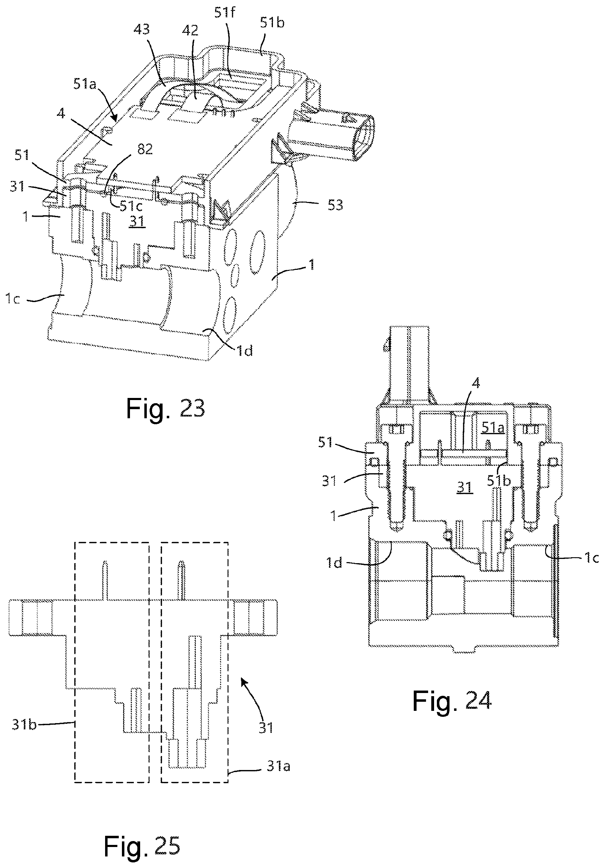

The refrigerant sensor 31 is preferably a temperature-pressure sensor, which integrates a temperature detecting function and a pressure detecting function. In terms of structure, the refrigerant sensor 31 has a temperature detecting part 31a and a pressure detecting part 31b disposed side by side. As shown in Figs. 4 and 25, the temperature detecting part 31a and pressure detecting part 31b are disposed one in front of the other in the flow direction of refrigerant; the temperature detecting part 31a is preferably disposed upstream of the pressure detecting part 31b. The temperature detecting part 31a and pressure detecting part 31b are preferably aligned with a center line of the second refrigerant channel 12. This design helps to reduce the length of the refrigerant sensor 31 in the direction of insertion into the valve body 1.

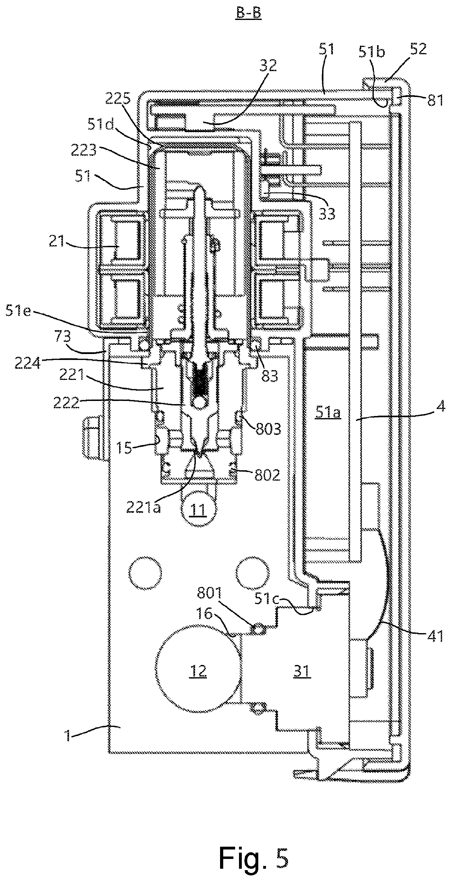

As shown in Figs. 3 and 5, in terms of orientation, the refrigerant sensor 31 and the valve assembly 2 may be disposed at different sides of the valve body 1, e.g. two adjacent sides of the valve body 1. Correspondingly, the first mounting cavity 15 and second mounting cavity 16 are provided at different sides of the valve body 1. In an embodiment which is not shown, the refrigerant sensor 31 may also be provided at the same side of the valve body 1 as the valve assembly 2, with the first mounting cavity 15 and second mounting cavity 16 being correspondingly provided at the same side of the valve body 1.

Continuing to refer to Figs. 3 and 5, the main electronic control board 4 is electrically connected to the valve assembly 2 and the refrigerant sensor 31 separately. The refrigerant sensor 31 tests refrigerant in the second refrigerant channel 12, to generate detection signals such as a temperature signal and pressure signal; the main electronic control board 4 can receive these detection signals. The main electronic control board 4 is also configured to send a drive signal to the valve assembly 2, to drive the valve assembly 2 to move, and thereby realize the process of throttling the refrigerant in the first refrigerant channel 11. More specifically, the main electronic control board 4 also has a microprocessor, which can process the detection signals generated by the refrigerant sensor 31, and generate the abovementioned drive signal.

Electrical connections may be achieved using pins or flexible electrically conductive elements, such as flexible flat cables. Electrical connections include dismantlable electrical connections. As shown in Figs. 3 and 5, the electronic expansion valves 92, 94 comprise a flexible electrically conductive element 41; the flexible electrically conductive element 41 electrically connects the refrigerant sensor 31 to the main electronic control board 4 removably. For example, one end of the flexible electrically conductive element 41 is configured to be snap-fitted and electrically connected to the main electronic control board 4, and the other end is welded to the refrigerant sensor 31. In the embodiment shown in Figs. 3 and 5, the valve assembly 2 is electrically connected to the main electronic control board 4 by pins.

As shown in Figs. 3 and 5, in terms of orientation, the main electronic control board 4 may be disposed at the same side of the valve body 1 as the refrigerant sensor 31. In Fig. 5, the main electronic control board 4 and the refrigerant sensor 31 are disposed side by side and electrically connected dismantably via the flexible electrically conductive element 41. Having the main electronic control board 4 and the refrigerant sensor 31 disposed side by side helps to make the structure of the electronic expansion valves 92, 94 more compact.

In embodiments which are not shown, the main electronic control board 4 and the refrigerant sensor 31 may also be disposed at different sides of the valve body 1; for example, the main electronic control board 4 and the refrigerant sensor 31 are disposed at adjacent sides of the valve body 1.

Continuing to refer to Figs. 2A, 2B, 3, 5 and 6, the main electronic control board 4 is accommodated in the housing assembly 5, and the refrigerant sensor 31 is connected to the housing assembly 5; more specifically, the refrigerant sensor 31 is pressed tightly onto the housing assembly 5. This design helps to increase the stability of installation of the refrigerant sensor 31 and makes the structure of the electronic expansion valves 92, 94 compact.

Continuing to refer to Fig. 5, the housing assembly 5 comprises a main housing 51; the main housing 51 has a main control cavity 51a; and the main electronic control board 4 is disposed in the main control cavity 51a. The valve assembly 2 and main electronic control board 4 are located at different sides of the valve body 1. This design enables the main control cavity 51a to have a larger extension space at the side of the valve body 1 where the main electronic control board 4 is disposed, thus enabling the main control cavity 51a to accommodate a larger main electronic control board 4; a larger main electronic control board 4 can integrate a greater number of electronic devices, which is very beneficial for realizing intelligent control of the electronic expansion valve.

Continuing to refer to Fig. 5, more specifically, the valve assembly 2 and the main electronic control board 4 are located at two adjacent sides of the valve body 1. This helps to increase the compactness of the electronic expansion valves 92, 94. Preferably, the valve assembly 2 and main electronic control board 4 are located at two adjacent sides of the valve body 1 where the refrigerant inlets and outlets are not disposed.

In embodiments which are not shown, the valve assembly 2, the main electronic control board 4 and the refrigerant sensor 31 may be located at three different sides of the valve body 1 where the refrigerant inlets and outlets are not disposed.

The electronic expansion valves 92, 94 have an installation position, which may be the orientation of the electronic expansion valves 92, 94 after being installed on a motor vehicle. The installation position is at the same time the position of the electronic expansion valves 92, 94 when in an operating state. To prevent refrigerant, as well as lubricating oil and impurities contained therein, from accumulating in the valve assembly 2, the valve assembly 2 is located vertically above the valve body 1 when the electronic expansion valves 92, 94 are in the installation position. This design enables refrigerant that entered the hood 225 of the valve assembly 2 during operation of the electronic expansion valves 92, 94 to flow out of the hood 225 under the action of gravity after the electronic expansion valves 92, 94 cease operation, thereby preventing accumulation of refrigerant in the valve assembly 2. At the installation position, the angle between the axis of the valve assembly 2 and the vertical direction should be less than 90°, preferably less than or equal to 75°.

Continuing to refer to Figs. 3, 4, 5 and 7, the electronic expansion valves 92, 94 further comprise valve assembly sensors 32, 33; the valve assembly sensors 32, 33 are electrically connected to the main electronic control board 4; and the valve assembly sensors 32, 33 are used for testing the valve assembly 2. The valve assembly sensors 32, 33 are disposed in the main control cavity 51a. Any sensors capable of testing each part of the valve assembly and generating feedback signals are included in the scope of the valve assembly sensors 32, 33. For example, the valve assembly sensors 32, 33 may be a Hall sensor for testing variation of the magnetic field of the permanent magnet of the rotor assembly 223, and may also be a position sensor for testing the movement of the spool 222 along the axis of the valve assembly 2. The valve assembly sensors 32, 33 can test abnormal operating states of the valve assembly 2, such as falling out of step or stalling.

The Hall sensor can sense variation in the magnetic field of the permanent magnet of the rotor assembly 223, and generates a feedback signal. The feedback signal is transmitted to the microprocessor of the main electronic control board 4.

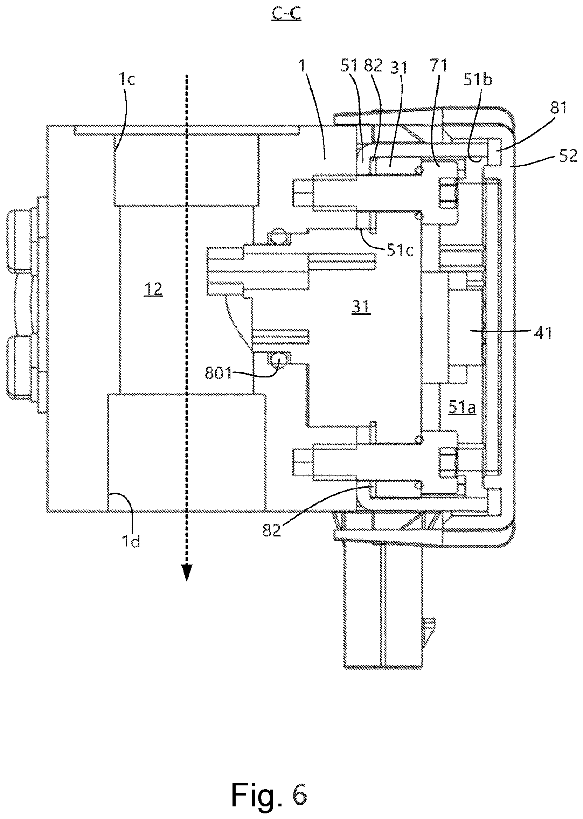

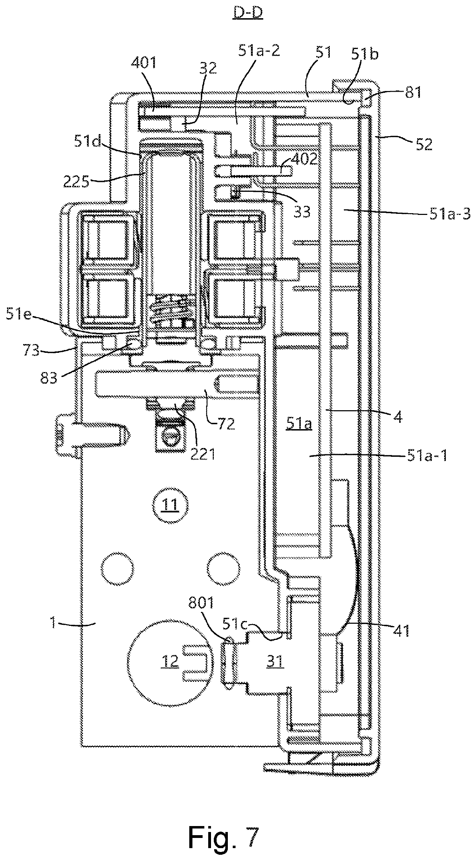

As shown in Figs. 6 and 7, the refrigerant sensor 31, the main housing 51 and the valve body 1 are stacked, and connected together in the stacking direction, wherein one of the main housing 51 and the refrigerant sensor 31 is clamped between the valve body 1 and the other of the main housing 51 and the refrigerant sensor 31. This design helps to reduce the number of steps in the assembly of the electronic expansion valves 92, 94, and makes the structure of the electronic expansion valves 92, 94 compact.

Continuing to refer to Fig. 6, the stacked refrigerant sensor 31, main housing 51 and valve body 1 are connected together by means of sensor connecting elements 71. The sensor connecting elements 71 may be screws. The sensor connecting elements 71 pass through at least one of the main housing 51 and the refrigerant sensor 31, and are fixedly connected to the valve body 1.

In the embodiment shown in Fig. 6, the main housing 51 is sandwiched between the refrigerant sensor 31 and the valve body 1, and the sensor connecting elements 71 pass through the refrigerant sensor 31 and the main housing 51.

In an embodiment which is not shown, a part of the refrigerant sensor 31 that is located in the valve body 1 is in threaded connection with the valve body 1, and a part of the refrigerant sensor 31 that is located outside the valve body presses the main housing 51 tightly onto the valve body 1.

Referring to Figs. 3, 4, 5, 8A and 8B, the housing assembly 5 further comprises a main cover 52; the main housing 51 has a main opening 51b, the main opening 51b being in communication with the main control cavity 51a; the main opening 51b may face away from the valve body 1, and allows the main electronic control board 4 to enter the main control cavity 51a; and the main cover 52 is used to cover the main housing 51, to close the main opening 51b.

Continuing to refer to Figs. 3, 4, 5, 8A and 8B, a main sealing element 81 is disposed in the peripheral direction of the main opening 51b, and is clamped between the main cover 52 and the main housing 51, to seal the main opening 51b. One of the main housing 51 and the main cover 52 may be provided with a groove for accommodating the main sealing element 82.

Continuing to refer to Figs. 3, 4, 5, 8A and 8B, the main housing 51 has a sensor hole 51c, the sensor hole 51c being in communication with the main control cavity 51a; the refrigerant sensor 31 passes through the sensor hole 51c, wherein part of the refrigerant sensor 31 is located in the main control cavity 51a and electrically connected to the main electronic control board 4; and another part of the refrigerant sensor 31 is located outside the main control cavity 51a, and used to test refrigerant in the second refrigerant channel 12. The part of the refrigerant sensor 31 that is located in the main control cavity 51a is pressed tightly onto the main housing 51.

As shown in Figs. 3 and 6, the electronic expansion valves 92, 94 further comprise a sensor sealing element 82, the sensor sealing element 82 being disposed in the circumferential direction of the sensor hole 51c; the sensor sealing element 82 is clamped between the refrigerant sensor 31 and the main housing 51, to seal the sensor hole 51c.

To fix the valve assembly 2, as shown in Figs. 3, 4 and 7, the electronic expansion valves 92, 94 further comprise valve assembly connecting elements 72; the valve assembly connecting elements 72 are configured to be inserted into the valve body 1 from a side of the valve body 1 where the valve assembly 2 is not disposed, and are in a limiting fit with a part of the valve assembly 2 that is located in the valve body 1, thereby fixing the valve assembly 2 to the valve body 1. This design enables the valve assembly 2 to be easily fitted to the valve body 1, and the valve assembly connecting elements 72 will not interfere with the valve assembly 2 in the process of being inserted into the valve body 1.

More specifically, the valve assembly connecting elements 72 are configured to be inserted into the valve body 1 from the side of the valve body 1 where the main electronic control board 4 is disposed. The valve assembly connecting elements 72 may be insertion pins.

As shown in Figs. 4, 5, 7, 8A and 8B, the main housing 51 has a drive cavity 51d and a valve assembly hole 51e, the valve assembly hole 51e being in communication with the drive cavity 51d; the valve assembly 2 passes through the valve assembly hole 51e, wherein part of the valve assembly 2 is located in the drive cavity 51d and electrically connected to the main electronic control board 4; and another part of the valve assembly 2 is located outside the main control cavity 51a, and used to throttle refrigerant in the first refrigerant channel 11.

Continuing to refer to Figs. 4 and 5, the coil assembly 21 is fixed as an insert in the drive cavity 51d by an injection molding process. The spool assembly 22 is inserted into the drive cavity 51d through the valve assembly hole 51e, and inserted in the middle of the coil assembly 21. The coil assembly 21 is electrically connected by pins to the main electronic control board 4 in the main control cavity 51a, wherein the pins as inserts run through a dividing wall of the drive cavity 51d and the main control cavity 51a in the injection molding process. The valve seat 221 and spool 222 are disposed outside the drive cavity 51d.

As shown in Figs. 3, 4 and 5, a valve assembly sealing element 83 is disposed in the circumferential direction of the valve assembly hole 51e; the valve assembly sealing element 83 is clamped between the valve assembly 2 and the main housing 51, to seal the valve assembly hole 51e. The valve assembly sealing element 83 is pressed tightly onto the hood 225 of the valve assembly 2 by the main housing 51 in a radial direction of the valve assembly 2. More specifically, the valve assembly sealing element 83 is pressed tightly against the seam between the hood 225 and the connection seat 224.

As shown in Fig. 7, the main control cavity 51a has a first cavity part 51a-1, a second cavity part 51a-2 and a corner cavity part 51a-3. The first cavity part 51a-1 and second cavity part 51a-2 are located at different sides of the valve body 1. The corner cavity part 51a-3 extends around a corner of the valve body 1 from the side of the valve body 1 where the first cavity part 51a-1 is disposed to the side of the valve body 1 where the second cavity part 51a-2 is disposed, wherein part of the main electronic control board 4 is located in the first cavity part 51a-1, and another part is located in the corner cavity part 51a-3. This design increases the volume of the main control cavity 51a, such that the main electronic control board 4 has a larger extension space. By "a corner of the valve body 1" is meant the intersection of outer surfaces of two adjacent sides of the valve body 1.

Furthermore, the valve assembly 2 is electrically connected to the part of the main electronic control board 4 that is located in the corner cavity part 51a-3. This design shortens the length of the pin needed to achieve the electrical connection.

The second cavity part 51a-2 is located at the side of the valve body 1 where the valve assembly 2 is disposed; the valve assembly sensors 32, 33 are disposed in the second cavity part 51a-2. The valve assembly sensors 32, 33 are electrically connected to the part of the main electronic control board 4 that is located in the corner cavity part 51a-3. More specifically, referring to Fig. 7, the valve assembly sensors 32, 33 are mounted on connecting circuit boards 401. 402 and electrically connected to the connecting circuit boards 401, 402. The connecting circuit boards 401, 402 are disposed in the main control cavity 51a and fixedly connected to the main housing 51, and the connecting circuit boards 401, 402 are electrically connected to the main electronic control board 4 by pins.

As shown in Figs. 5 and 7, the main housing 51 extends around a corner of the valve body 1 from one side of the valve body 1 to another side of the valve body 1. More specifically, the main housing 51 extends around a corner of the valve body 1 from the side of the valve body 1 where the main electronic control board 4 is disposed to the side of the valve body 1 where the valve assembly 2 is disposed. This solution increases the integrity of the main housing 51, and facilitates assembly and manufacture of the electronic expansion valves 92, 94.

As shown in Figs. 3, 5 and 7, the electronic expansion valves 92, 94 further comprise a housing connecting element 73; the housing connecting element 73 is connected to the main housing 51 and the valve body 1, wherein one end of the housing connecting element 73 is connected to the main housing 51 at the side of the valve body 1 where the valve assembly 2 is disposed, and another end of the housing connecting element 73 is connected to the valve body 1 at the side opposite the side of the valve body 1 where the main electronic control board 4 is disposed. The housing connecting element 73 increases the stability of connection of the main housing 51 to the valve body 1.

As shown in Figs. 3, 8, 8 and 9A - 9D, the side of the valve body 1 where the refrigerant sensor 31 is disposed has a first flat part 13 and a first protruding part 14, wherein the first protruding part 14 protrudes from the first flat part 13 in the opposite direction to that in which the sensor 31 is inserted into the valve body 1; the sensor 31 is configured to be inserted into the first protruding part 14. The second mounting cavity 16 is provided in the first protruding part 14. This design allows the first protruding part 14 to have sufficient thickness to cooperate with the connecting elements that fix the refrigerant sensor 31. The first protruding part 14 is provided with connecting holes 14a for connecting the refrigerant sensor 31; the connecting holes 14a are configured to cooperate, by insertion connection, with the connecting elements that fix the refrigerant sensor 31.

The side of the main housing 51 that is close to the valve body 1 has a second flat part 511 and a second protruding part 512, wherein the second protruding part 512 protrudes from the second flat part 511 in the same direction as that in which the sensor 31 is inserted into the valve body 1; the second flat part 511 is disposed opposite the first protruding part 14; and the second protruding part 512 is disposed opposite the first flat part 13. This design helps to increase the volume of the main control cavity 51a.

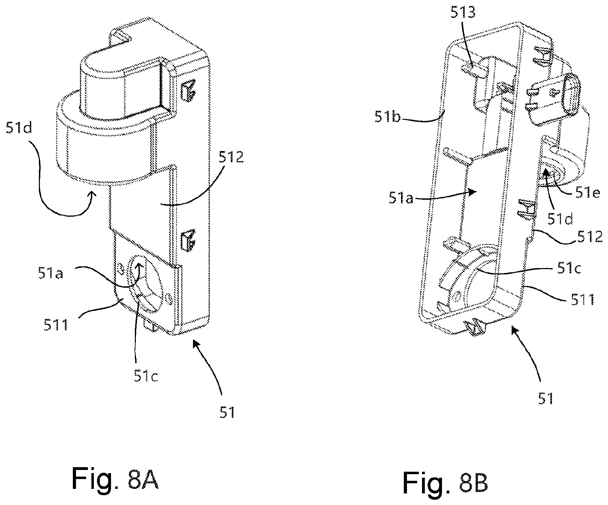

As shown in Figs. 5 and 8B, the main electronic control board 4 may be fixed to the main housing 51. For example, four corners of the main electronic control board 4 may be fixed by screws to the main housing 51. This design helps to increase the stability of installation of the main electronic control board 4 in the main control cavity 51a. Fig. 8B shows post holes 513 on the main housing 51 for fixing the main electronic control board 4.

As shown in Figs. 3, 4, 5 and 6, the electronic expansion valves 92, 94 further comprise a first valve body sealing element 801, a second valve body sealing element 802 and a third valve body sealing element 803.

The first valve body sealing element 801 is disposed in the second mounting cavity 16 of the valve body 1, and disposed around the refrigerant sensor 31; the first valve body sealing element 801 is pressed tightly by the valve body 1 and the refrigerant sensor 31.

The second valve body sealing element 802 and third valve body sealing element 803 are each disposed in the first mounting cavity 15, and disposed around the valve assembly 2; the second valve body sealing element 802 and third valve body sealing element 803 are each pressed tightly by the valve body 1 and the valve assembly 2.

More specifically, the second valve body sealing element 802 and third valve body sealing element 803 are each disposed around the valve seat 221 of the valve assembly 2. The valve hole 221a of the valve seat 221 is located between the second valve body sealing element 802 and third valve body sealing element 803 in the axial direction of the valve assembly 2. In this way, it can be ensured that refrigerant in the first refrigerant channel 11 can completely pass through the valve hole 221a.

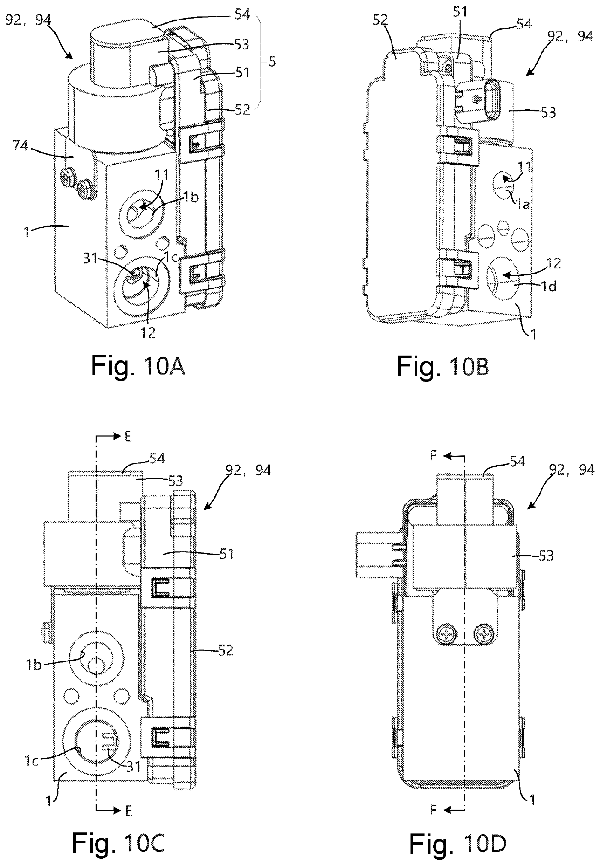

Figs. 10A - 10D and Figs. 11, 12, 13, 14A, 14B, 15A and 15B show a second embodiment of the electronic expansion valves 92, 94 in the present invention. Components in the second embodiment that are the same as in the first embodiment use the same reference labels, and parts of the second embodiment that are the same as in the technical solution of the first embodiment are not described again.

Referring to Figs. 10A - 10D and 11, 12, 13, 15A and 15B, the housing assembly 5 further comprises a secondary housing 53; the secondary housing 53 has a drive cavity 53a and a valve assembly hole 53b; the valve assembly hole 53b is in communication with the drive cavity 53a; the valve assembly 2 passes through the valve assembly hole 53b, wherein part of the valve assembly 2 is located in the drive cavity 53a and electrically connected to the main electronic control board 4; another part of the valve assembly 2 is located outside the drive cavity 53a, and used to throttle refrigerant in the first refrigerant channel 11; and the secondary housing 53 is dismantably connected to the main housing 51. This solution gives the electronic expansion valves 92, 94 a greater degree of modularity, such that the electronic expansion valves 92, 94 are easy to dismantle.

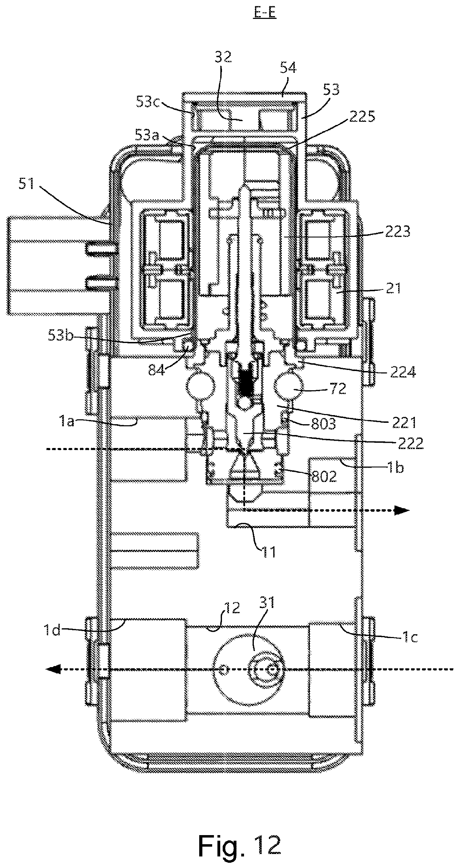

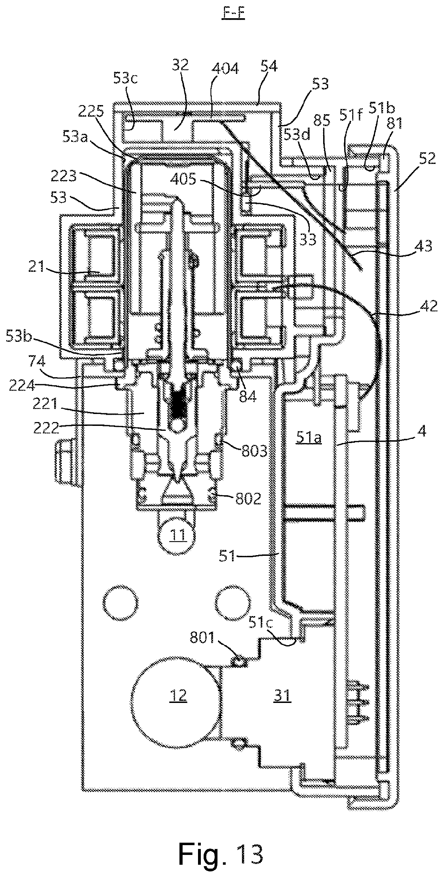

Continuing to refer to Figs. 12 and 13, the coil assembly 21 is fixed as an insert in the drive cavity 53a by an injection molding process. The spool assembly 22 is inserted into the drive cavity 53a through the valve assembly hole 53b, and inserted in the middle of the coil assembly 21. The coil assembly 21 is electrically connected to the main electronic control board 4 in the main control cavity 51a by means of a flexible electrically conductive element 42. The valve seat 221 and spool 222 are disposed outside the drive cavity 53a.

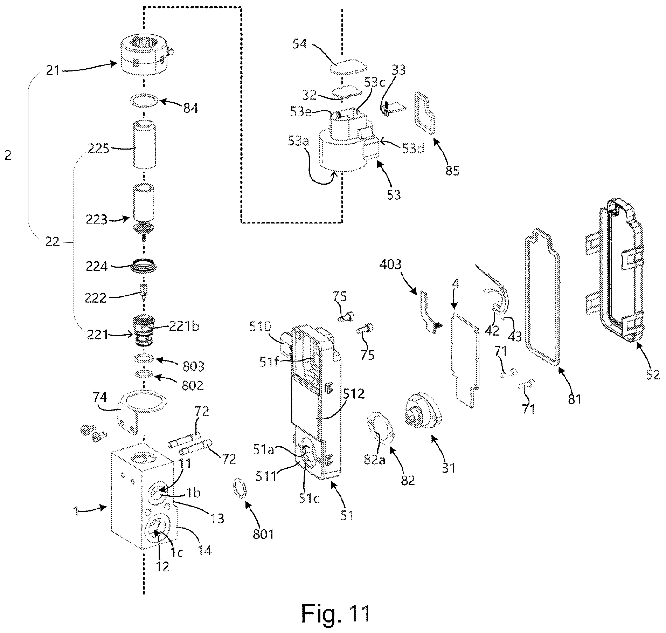

As shown in Figs. 11, 12 and 13, a valve assembly sealing element 84 is disposed in the circumferential direction of the valve assembly hole 53b; the valve assembly sealing element 84 is clamped between the valve assembly 2 and the secondary housing 53, to seal the valve assembly hole 53b. The valve assembly sealing element 84 is pressed tightly onto the hood 225 of the valve assembly 2 by the secondary housing 53 in a radial direction of the valve assembly 2. More specifically, the valve assembly sealing element 84 is pressed tightly against the seam between the hood 225 and the connection seat 224.

As shown in Figs. 11, 12, 13, 14A, 14B, 15A and 15B, the secondary housing 53 also has a secondary control cavity 53c and a secondary connecting opening 53d; the secondary connecting opening 53d is in communication with the secondary control cavity 53c. The main housing 51 has a main connecting opening 51f; the main connecting opening 51f is in communication with the main control cavity 51a. The secondary connecting opening 53d is configured to be in communication with the main connecting opening 51f, such that the secondary control cavity 53c is in communication with the main control cavity 51a. The flexible electrically conductive element 42 passes through the main connecting opening 51f and the secondary connecting opening 53d, to electrically connect the main electronic control board 4 to the valve assembly 2 removably. The flexible electrically conductive element 42 may be a flexible flat cable. One end of the flexible electrically conductive element 42 is configured to be snap-fitted and electrically connected to the main electronic control board 4, and the other end is welded to the valve assembly 2.

Continuing to refer to Figs. 12, 13 and 15A, the secondary control cavity 53c and the main control cavity 51a are located at different sides of the valve body 1, e.g. at two adjacent sides, wherein the main control cavity 51a is located at the side of the valve body 1 where the main electronic control board 4 is disposed. The secondary control cavity 53c is located at the side of the valve body 1 where the valve assembly 2 is disposed.

The housing assembly 5 further comprises a secondary cover 54; the secondary housing 53 has a secondary opening 53e, the secondary opening 53e being in communication with the secondary control cavity 53c; and the secondary cover 54 is configured to cover the secondary housing 53, to close the secondary opening 53e. The secondary cover 54 may be welded to the secondary housing 53.

The electronic expansion valves 92, 94 further comprise a connection sealing element 85; the connection sealing element 85 is disposed in the peripheral direction of the secondary connecting opening 53d and the main connecting opening 51f; and the connection sealing member 85 is clamped between the main housing 51 and the secondary housing 53, to seal the secondary connecting opening 53d and the main connecting opening 51f.

The valve assembly sensors 32, 33 are disposed in the secondary control cavity 53c. A flexible electrically conductive element 43 passes through the main connecting opening 51f and the secondary connecting opening 53d, to electrically connect the main electronic control board 4 to the valve assembly sensors 32, 33 removably. More specifically, referring to Fig. 13, the valve assembly sensors 32, 33 are mounted on connecting circuit boards 404, 405 and electrically connected to the connecting circuit boards 404, 405. The connecting circuit boards 404, 405 are disposed in the secondary control cavity 53c and fixedly connected to the main housing 51, and the connecting circuit boards 404, 405 are electrically connected to the main electronic control board 4 by means of the flexible electrically conductive element 43.

The flexible electrically conductive element 43 may be a flexible flat cable. One end of the flexible electrically conductive element 43 is configured to be snap-fitted and electrically connected to the main electronic control board 4, and the other end is welded to the connecting circuit boards 404,405.

As shown in Figs. 11 and 13, the electronic expansion valves 92, 94 further comprise a housing connecting element 74; the housing connecting element 74 is connected to the secondary housing 53 and the valve body 1, wherein one end of the housing connecting element 74 is connected to the secondary housing 53 at the side of the valve body 1 where the valve assembly 2 is disposed, and another end of the housing connecting element 74 is connected to the valve body 1 at the side opposite the side of the valve body 1 where the main electronic control board 4 is disposed. This solution can provide stability of connection of the secondary housing 53 to the valve body 1.

As shown in Fig. 11, the electronic expansion valves 92, 94 further comprise housing assembly connecting elements 75; the secondary housing 53 is removably connected to the main housing 51 by means of the housing assembly connecting elements 75. The housing assembly connecting elements 75 may be screws.

As shown in Fig. 11, the main housing 51 has an interface part 510. The interface part 510 is electrically connected to the main electronic control board 4 by means of a connecting circuit board 403. The interface part 510 is used for connection to the outside.

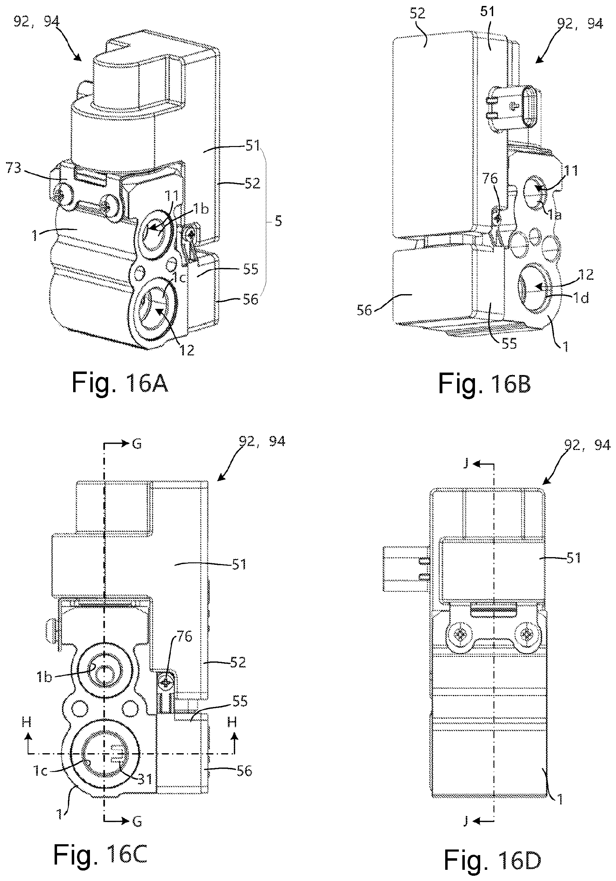

Figs. 16A - 16D and Figs. 17, 18, 19, 20, 21A, 21B, 22A and 22B show a third embodiment of the electronic expansion valves 92, 94 in the present invention. Components in the third embodiment that are the same as in the first embodiment use the same reference labels, and parts of the third embodiment that are the same as in the technical solution of the first embodiment are not described again.

As shown in Figs. 16A - 16D and Figs. 17, 22A and 22B, the housing assembly 5 further comprises a secondary housing 55; the secondary housing 55 has a secondary control cavity 55a and a sensor hole 55b; the sensor hole 55b is in communication with the secondary control cavity 55a; the refrigerant sensor 31 passes through the sensor hole 55b, wherein part of the refrigerant sensor 31 is located in the secondary control cavity 55a and electrically connected to the main electronic control board 4; another part of the refrigerant sensor 31 is located outside the secondary control cavity 55a, and used to test refrigerant in the second refrigerant channel 12; and the secondary housing 55 is removably connected to the main housing 51. This solution gives the electronic expansion valves 92, 94 a greater degree of modularity, such that the electronic expansion valves 92, 94 are easy to dismantle.

The part of the refrigerant sensor 31 that is located in the secondary control cavity 55a is pressed tightly onto the secondary housing 55.

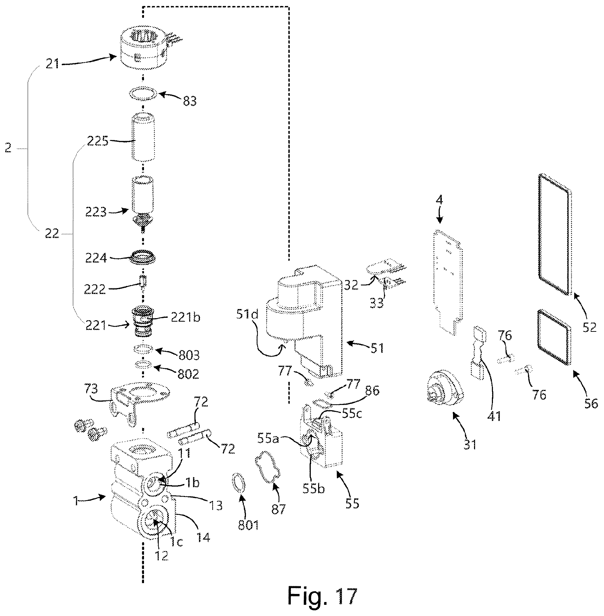

Referring to Figs. 17, 19, 21A, 21B, 22A and 22B, the secondary housing 55 also has a secondary connecting opening 55c; the secondary connecting opening 55c is in communication with the secondary control cavity 55a. The main housing 51 has a main connecting opening 51g; the main connecting opening 51g is in communication with the main control cavity 51a. The secondary connecting opening 55c is configured to be in communication with the main connecting opening 51g, such that the secondary control cavity 55a is in communication with the main control cavity 51a. A flexible electrically conductive element 41 passes through the main connecting opening 51g and the secondary connecting opening 55c, to electrically connect the main electronic control board 4 to the refrigerant sensor 31 removably. The flexible electrically conductive element 41 may be a flexible flat cable. One end of the flexible electrically conductive element 41 is configured to be snap-fitted and electrically connected to the main electronic control board 4, and the other end is welded to the refrigerant sensor 31.

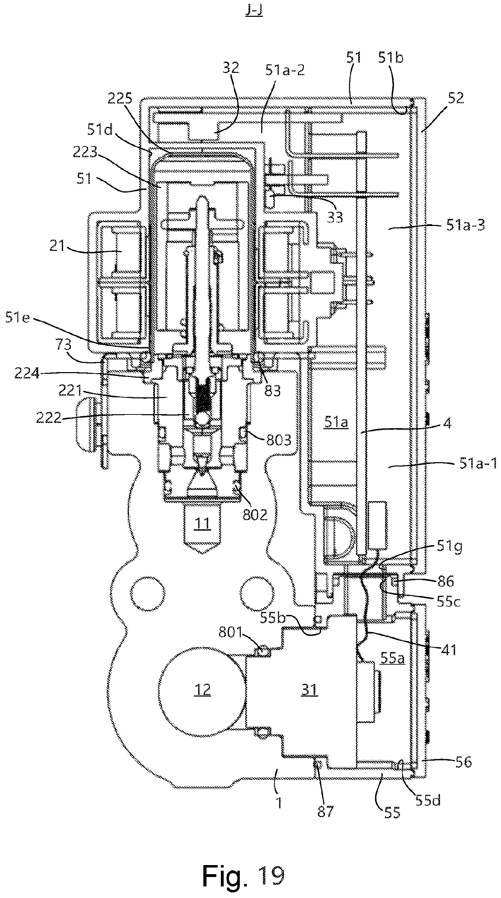

Continuing to refer to Fig. 19, the secondary control cavity 55a and the main control cavity 51a are both located at the side of the valve body 1 where the main electronic control board 4 is disposed. The secondary control cavity 55a and the main control cavity 51a are disposed side by side.

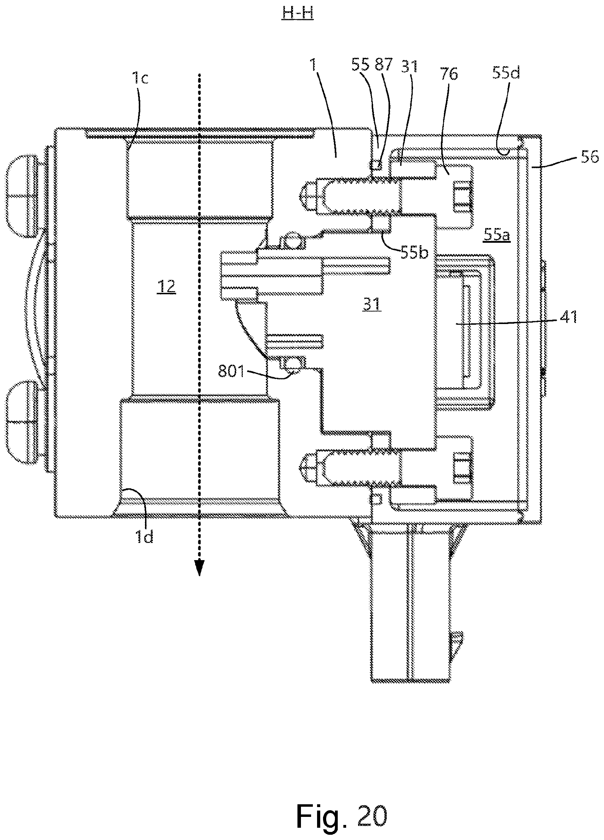

As shown in Figs. 17 and 20, the housing assembly 5 further comprises a secondary cover 56; the secondary housing 55 has a secondary opening 55d, the secondary opening 55d being in communication with the secondary control cavity 55a; and the secondary cover 56 is configured to cover the secondary housing 55, to close the secondary opening 55d. In this embodiment, the secondary cover 56 may be welded to the secondary housing 55. The main cover 52 may be welded to the main housing 51. The secondary opening 55d and the main opening 51db both open in the direction facing away from the valve body 1.

As shown in Figs. 17 and 19, the electronic expansion valves 92, 94 further comprise a connection sealing element 86; the connection sealing element 86 is disposed in the peripheral direction of the secondary connecting opening 55c and the main connecting opening 51g; and the connection sealing member 86 is clamped between the main housing 51 and the secondary housing 55, to seal the secondary connecting opening 55c and the main connecting opening 51g.

Continuing to refer to Fig. 19, the refrigerant sensor 31, the secondary housing 55 and the valve body 1 are stacked, and connected together in the stacking direction, wherein one of the secondary housing 55 and the refrigerant sensor 31 is clamped between the valve body 1 and the other of the secondary housing 55 and the refrigerant sensor 31. This design helps to reduce the number of steps in the assembly of the electronic expansion valves 92, 94, and makes the structure of the electronic expansion valves 92, 94 compact.

As shown in Figs 17 and 20, the electronic expansion valves 92, 94 further comprise sensor connecting elements 76; the stacked refrigerant sensor 31, secondary housing 55 and valve body 1 are connected together by means of the sensor connecting elements 76. The sensor connecting elements 76 may be screws. The sensor connecting elements 76 pass through at least one of the secondary housing 55 and the refrigerant sensor 31, and are fixedly connected to the valve body 1.

In the embodiment shown in Fig. 20, the secondary housing 55 is sandwiched between the refrigerant sensor 31 and the valve body 1, and the sensor connecting elements 76 pass through the refrigerant sensor 31 and the secondary housing 55.

In an embodiment which is not shown, a part of the refrigerant sensor 31 that is located in the valve body 1 is in threaded connection with the valve body 1, and a part of the refrigerant sensor 31 that is located outside the valve body presses the secondary housing 55 tightly onto the valve body 1.

As shown in Figs. 17 and 20, the electronic expansion valves 92, 94 further comprise a sensor sealing element 87; the sensor sealing element 87 is disposed in the circumferential direction of the sensor hole 55b; and the sensor sealing element 87 is clamped between the secondary housing 55 and the valve body 1, to seal the sensor hole 55b.

The electronic expansion valves 92, 94 further comprise housing assembly connecting elements 77; the secondary housing 55 is removably connected to the main housing 51 by means of the housing assembly connecting elements 77. The housing assembly connecting elements 77 may be screws.

To fix the valve assembly 2 to the valve body 1, those skilled in the art may further obtain an electronic expansion valve based on the content of the specification of the present invention, the electronic expansion valve comprising: a valve body 1, the valve body 1 having a first refrigerant inlet 1a and a first refrigerant outlet 1b, wherein a first refrigerant channel 11 is formed between the first refrigerant inlet 1a and the first refrigerant outlet 1b; a valve assembly 2, for throttling refrigerant in the first refrigerant channel 11; and the electronic expansion valves 92, 94 further comprise: valve assembly connecting elements 72; the valve assembly connecting elements 72 are configured to be inserted into the valve body 1 from a side of the valve body 1 where the valve assembly 2 is not disposed, and are in a limiting fit with a part of the valve assembly 2 that is located in the valve body 1, thereby fixing the valve assembly 2 to the valve body 1. This solution ensures that the valve assembly 2 will not affect or be affected by the valve assembly connecting elements 72 in the process of being fixed to the valve body 1, and the fixing method is relatively simple.

The valve assembly connecting elements 72 are configured to be inserted into the valve body 1 from a side adjacent to the side of the valve body 1 where the valve assembly 2 is disposed.

The valve body 1 has a first mounting cavity 15 and limiting holes 1e; the first mounting cavity 15 is provided at one side of the valve body 1, and the limiting holes 1e are provided at another side of the valve body 1, wherein the first mounting cavity 15 allows the valve assembly 2 to be inserted, and the limiting holes 1e allow the valve assembly connecting elements 72 to be inserted; the limiting holes 1e are in communication with the first mounting cavity 15 within the valve body 1, so that the valve assembly connecting elements 72 can be located in the first mounting cavity 15 after being inserted into the limiting holes 1e, and thus be in a limiting fit with a part of the valve assembly 2 that is located in the first mounting cavity 15.

The valve assembly 2 has recesses 221b for forming a limiting fit with the valve assembly connecting elements 72.

The valve assembly connecting elements 72 are clamped by inner walls of the limiting holes 1e and the recesses 221b.

The number of valve assembly connecting elements 72 is two, and these are in a limiting fit with two sides of the valve assembly 2 respectively.

The valve seat 221 of the valve assembly 2 is in a limiting fit with the valve assembly connecting elements 72.

The two valve assembly connecting elements 72 are disposed symmetrically in relation to the valve assembly 2.

To check the operating state of the valve assembly 2, those skilled in the art may further obtain an electronic expansion valve based on the content of the specification of the present invention, the electronic expansion valve comprising: a valve body 1, the valve body 1 having a first refrigerant inlet 1a and a first refrigerant outlet 1b, wherein a first refrigerant channel 11 is formed between the first refrigerant inlet 1a and the first refrigerant outlet 1b; a valve assembly 2, for throttling refrigerant in the first refrigerant channel 11; a main electronic control board 4, electrically connected to the valve assembly 2; and the electronic expansion valves 92, 94 further comprise: valve assembly sensors 32, 33; the valve assembly sensors 32, 33 are electrically connected to the main electronic control board 4; the valve assembly sensors 32, 33 are used to check the valve assembly 2; and the valve assembly 2 and the main electronic control board 4 are located at different sides of the valve body 1. This solution enables the operating state of the valve assembly 2 to be checked. The valve assembly sensors 32, 33 may be, but are not limited to being, Hall sensors.

The electronic expansion valves 92, 94 further comprise a housing assembly 5, the housing assembly 5 comprising a main housing 51; the main housing 51 has a main control cavity 51a; the main electronic control board 4 is disposed in the main control cavity 51a; and the valve assembly sensors 32, 33 are disposed in the main control cavity 51a.

The valve assembly sensor 32 is disposed at an end of the valve assembly 2 that is remote from the valve body 1 along the axis of the valve assembly 2. In this embodiment, the valve assembly sensor 32 is an angle-type Hall sensor.

The valve assembly sensor 33 is disposed at a radially outer side of the valve assembly 2. In this embodiment, the valve assembly sensor 32 is a switch-type Hall sensor.

The main control cavity 51a has a first cavity part 51a-1, a second cavity part 51a-2 and a corner cavity part 51a-3. The first cavity part 51a-1 and second cavity part 51a-2 are located at different sides of the valve body 1. The corner cavity part 51a-3 extends around a corner of the valve body 1 from the side of the valve body 1 where the first cavity part 51a-1 is disposed to the side of the valve body 1 where the second cavity part 51a-2 is disposed, wherein part of the main electronic control board 4 is disposed in the first cavity part 51a-1, and another part is disposed in the corner cavity part 51a-3.

The valve assembly sensors 32, 33 are disposed in the second cavity part 51a-2, and the valve assembly sensors 32, 33 are electrically connected to the part of the main electronic control board 4 that is located in the corner cavity part 51a-3.

The second cavity part 51a-2 is located at the side of the valve body 1 where the valve assembly 2 is disposed, and the first cavity part 51a-1 is located at the side of the valve body 1 where the main electronic control board 4 is disposed.

The electronic expansion valves 92, 94 further comprise a housing assembly 5, the housing assembly 5 comprising a main housing 51 and a secondary housing 53; the secondary housing 53 is removably connected to the main housing 51; the main housing 51 has a main control cavity 51a; the main electronic control board 4 is disposed in the main control cavity 51a; the secondary housing 53 has a secondary control cavity 53c, and the valve assembly sensors 32, 33 are disposed in the secondary control cavity 53c.

The secondary housing 53 also has a secondary connecting opening 53d; the secondary connecting opening 53d is in communication with the secondary control cavity 53c; the main housing 51 has a main connecting opening 51f; the main connecting opening 51f is in communication with the main control cavity 51a; the secondary connecting opening 53d is configured to be in communication with the main connecting opening 51f, such that the secondary control cavity 53c is in communication with the main control cavity 51a; and a flexible electrically conductive element 43 passes through the main connecting opening 51f and the secondary connecting opening 53d, to electrically connect the main electronic control board 4 to the valve assembly sensors 32, 33 removably.

The secondary control cavity 53c is located at the side of the valve body 1 where the valve assembly 2 is disposed.

To fix the refrigerant sensor 31 to the electronic expansion valves 92, 94, those skilled in the art may further obtain an electronic expansion valve based on the content of the specification of the present invention, the electronic expansion valve comprising: a valve body 1, the valve body 1 having a first refrigerant inlet 1a, a first refrigerant outlet 1b, a second refrigerant inlet 1c and a second refrigerant outlet 1d, wherein a first refrigerant channel 11 is formed between the first refrigerant inlet 1a and the first refrigerant outlet 1b, and a second refrigerant channel 12 is formed between the second refrigerant inlet 1c and the second refrigerant outlet 1d; a valve assembly 2, for throttling refrigerant in the first refrigerant channel 11; a refrigerant sensor 31, for testing refrigerant in the second refrigerant channel 12; a main electronic control board 4, electrically connected to the valve assembly 2 and the refrigerant sensor 31 separately; and the electronic expansion valves 92, 94 further comprise: a housing assembly 5, comprising a main housing 51; the main housing 51 has a main control cavity 51a; the main electronic control board 4 is disposed in the main control cavity 51a; and the refrigerant sensor 31 is pressed tightly onto the housing assembly 5. This solution can increase the stability of installation of the refrigerant sensor 31 on the electronic expansion valves 92, 94.

The refrigerant sensor 31, the main housing 51 and the valve body 1 are stacked, and connected together in the stacking direction, wherein one of the main housing 51 and the refrigerant sensor 31 is clamped between the valve body 1 and the other of the main housing 51 and the refrigerant sensor 31.

The electronic expansion valves 92, 94 further comprise sensor connecting elements 71; the stacked refrigerant sensor 31, main housing 51 and valve body 1 are connected together by means of the sensor connecting elements 71.

The part of the refrigerant sensor 31 that is located in the main control cavity 51a is pressed tightly onto the main housing 51.

The housing assembly 5 further comprises a secondary housing 55; the secondary housing 55 is removably connected to the main housing 51; and the refrigerant sensor 31 is pressed tightly onto the secondary housing 55.

The refrigerant sensor 31, the secondary housing 55 and the valve body 1 are stacked, and connected together in the stacking direction, wherein one of the secondary housing 55 and the refrigerant sensor 31 is clamped between the valve body 1 and the other of the secondary housing 55 and the refrigerant sensor 31.

The electronic expansion valves 92, 94 further comprise sensor connecting elements 76; the stacked refrigerant sensor 31, secondary housing 55 and valve body 1 are connected together by means of the sensor connecting elements 76.

The secondary housing 55 has a secondary control cavity 55a and a sensor hole 55b; the sensor hole 55b is in communication with the secondary control cavity 55a; the refrigerant sensor 31 passes through the sensor hole 55b, wherein part of the refrigerant sensor 31 is located in the secondary control cavity 55a and electrically connected to the main electronic control board 4; and another part of the refrigerant sensor 31 is located outside the secondary control cavity 55a, and used to test refrigerant in the second refrigerant channel 12.

The part of the refrigerant sensor 31 that is located in the secondary control cavity 55a is pressed tightly onto the secondary housing 55.

As shown in Fig. 23, the pins of the refrigerant sensor 31 pass through the sensor hole 51c and extend into the main control cavity 51a, to be plugged into the main electronic control board 4. The part of the refrigerant sensor 31 that is located outside the main control cavity 51a is clamped between the main housing 51 and the valve body 1.

In Fig. 23, the part of the refrigerant sensor 31 that is located outside the main control cavity 51a is pressed tightly onto the main housing 51. The main housing 51 has a main opening 51b facing away from the valve body 1. The main electronic control board 4 is fitted into the main control cavity 51a through the main opening 51b.

As shown in Fig. 24, the main housing 51 has a main opening 51b facing toward the valve body 1; the main circuit board 4 is disposed between the main housing 51 and the valve body 1, and located in the main control cavity 51a. The refrigerant sensor 31 is clamped between the main housing 51 and the valve body 1. The main circuit board 4 is fitted into the main housing 51 through the opening.

Based on the content of the specification of the present invention, those skilled in the art may also obtain a method for manufacturing an electronic expansion valve, comprising a step of pressing a refrigerant sensor 31 tightly onto a housing assembly 5.

More specifically, the method for manufacturing an electronic expansion valve comprises a step of pressing a refrigerant sensor 31 tightly onto a main housing 51 or a secondary housing 55.

More specifically, the method for manufacturing an electronic expansion valve comprises a step of first stacking a refrigerant sensor 31, a main housing 51 and a valve body 1, and then connecting the refrigerant sensor 31, main housing 51 and valve body 1 together in the stacking direction.

More specifically, the method for manufacturing an electronic expansion valve comprises a step of first stacking a refrigerant sensor 31, a secondary housing 55 and a valve body 1, and then connecting the refrigerant sensor 31, secondary housing 55 and valve body 1 together in the stacking direction.

More specifically, the method for manufacturing an electronic expansion valve comprises a step of using a sensor connecting element 71 to connect the refrigerant sensor 31, main housing 51 and valve body 1 together in the stacking direction.

More specifically, the method for manufacturing an electronic expansion valve comprises a step of using a sensor connecting element 76 to connect the refrigerant sensor 31, secondary housing 55 and valve body 1 together in the stacking direction.

Although the present invention has been disclosed above through preferred embodiments, these are not intended to limit it. Any person skilled in the art can make possible changes and amendments without departing from the scope of protection defined by the claims of the present invention.

## Claims

1. An electronic expansion valve, comprising:
a valve body (1), the valve body (1) having a first refrigerant inlet (1a), a first refrigerant outlet (1b), a second refrigerant inlet (1c) and a second refrigerant outlet (1d), wherein a first refrigerant channel (11) is formed between the first refrigerant inlet (1a) and the first refrigerant outlet (1b), and a second refrigerant channel (12) is formed between the second refrigerant inlet (1c) and the second refrigerant outlet (1d);
a valve assembly (2), for throttling refrigerant in the first refrigerant channel (11);
a refrigerant sensor (31), for testing refrigerant in the second refrigerant channel (12);
a main electronic control board (4), electrically connected to the valve assembly (2) and the refrigerant sensor (31) separately;
wherein the electronic expansion valve (92, 94) further comprises:
a housing assembly (5), comprising a main housing (51), the main housing (51) having a main control cavity (51a), the main electronic control board (4) being disposed in the main control cavity (51a), and the refrigerant sensor (31) being pressed tightly onto the housing assembly (5),
**characterized in that** the housing assembly (5) further comprises a secondary housing (55), the secondary housing (55) being removably connected to the main housing (51);
the refrigerant sensor (31), the secondary housing (55) and the valve body (1) are stacked, and connected together in the stacking direction, wherein one of the secondary housing (55) and the refrigerant sensor (31) is clamped between the valve body (1) and the other of the secondary housing (55) and the refrigerant sensor (31).

2. The electronic expansion valve as claimed in claim 1, **characterized in that** the refrigerant sensor (31), the main housing (51) and the valve body (1) are stacked, and connected together in the stacking direction, wherein one of the main housing (51) and the refrigerant sensor (31) is clamped between the valve body (1) and the other of the main housing (51) and the refrigerant sensor (31).

3. The electronic expansion valve as claimed in claim 2, **characterized in that** the electronic expansion valve (92, 94) further comprises a sensor connecting element (71); and the stacked refrigerant sensor (31), main housing (51) and valve body (1) are connected together by means of the sensor connecting element (71).

4. The electronic expansion valve as claimed in claim 2, **characterized in that** the main housing (51) has a sensor hole (51c), the sensor hole (51c) being in communication with the main control cavity (51a), and the refrigerant sensor (31) passing through the sensor hole (51c),
wherein part of the refrigerant sensor (31) is located in the main control cavity (51a) and electrically connected to the main electronic control board (4); and another part of the refrigerant sensor (31) is located outside the main control cavity (51a), and configured to test refrigerant in the second refrigerant channel (12).

5. The electronic expansion valve as claimed in claim 4, **characterized in that** the part of the refrigerant sensor (31) that is located in the main control cavity (51a) is pressed tightly onto the main housing (51).

6. The electronic expansion valve as claimed in claim 1, **characterized in that** the electronic expansion valve (92, 94) further comprises a sensor connecting element (76); and the stacked refrigerant sensor (31), secondary housing (55) and valve body (1) are connected together by means of the sensor connecting element (76).

7. The electronic expansion valve as claimed in claim 1, **characterized in that** the secondary housing (55) has a secondary control cavity (55a) and a sensor hole (55b), the sensor hole (55b) being in communication with the secondary control cavity (55a), and the refrigerant sensor (31) passing through the sensor hole (55b),
wherein part of the refrigerant sensor (31) is located in the secondary control cavity (55a) and electrically connected to the main electronic control board (4); and another part of the refrigerant sensor (31) is located outside the secondary control cavity (55a), and configured to test refrigerant in the second refrigerant channel (12).

8. The electronic expansion valve as claimed in claim 7, **characterized in that** the secondary housing (55) further has a secondary connecting opening (55c), the secondary connecting opening (55c) being in communication with the secondary control cavity (55a); and the main housing (51) has a main connecting opening (51g), the main connecting opening (51g) being in communication with the main control cavity (51a);
the secondary connecting opening (55c) is configured to be in communication with the main connecting opening (51g), such that the secondary control cavity (55a) is in communication with the main control cavity (51a).

9. A thermal management assembly, comprising a heat exchanger (95), the heat exchanger (95) having a first heat exchange channel (95a) and a second heat exchange channel (95b), the first heat exchange channel (95a) and the second heat exchange channel (95b) not being in communication with each other, **characterized in that** the thermal management assembly further comprises the electronic expansion valve (94) as claimed in any one of claims 1 - 8, the electronic expansion valve (94) being mounted on the heat exchanger (95), wherein the electronic expansion valve (94) is in communication with the first heat exchange channel (95a).

## Patentansprüche

1. Elektronisches Expansionsventil, umfassend:
einen Ventilkörper (1), wobei der Ventilkörper (1) einen ersten Kältemitteleinlass (1a), einen ersten Kältemittelauslass (1b), einen zweiten Kältemitteleinlass (1c) und einen zweiten Kältemittelauslass (1d) aufweist, wobei ein erster Kältemittelkanal (11) zwischen dem ersten Kältemitteleinlass (1a) und dem ersten Kältemittelauslass (1b) gebildet ist und ein zweiter Kältemittelkanal (12) zwischen dem zweiten Kältemitteleinlass (1c) und dem zweiten Kältemittelauslass (1d) gebildet ist;
eine Ventilanordnung (2) zum Drosseln von Kältemittel im ersten Kältemittelkanal (11);
einen Kältemittelsensor (31) zum Prüfen von Kältemittel im zweiten Kältemittelkanal (12);
eine elektronische Hauptsteuerplatine (4), die separat mit der Ventilanordnung (2) und dem Kältemittelsensor (31) elektrisch verbunden ist;
wobei das elektronische Expansionsventil (92, 94) ferner umfasst:
eine Gehäuseanordnung (5), die ein Hauptgehäuse (51) umfasst, wobei das Hauptgehäuse (51) einen Hauptsteuerhohlraum (51a) aufweist, die elektronische Hauptsteuerplatine (4) im Hauptsteuerhohlraum (51a) angeordnet ist und der Kältemittelsensor (31) fest an die Gehäuseanordnung (5) gepresst ist,
**dadurch gekennzeichnet,**
**dass** die Gehäuseanordnung (5) ferner ein Sekundärgehäuse (55) umfasst, wobei das Sekundärgehäuse (55) lösbar mit dem Hauptgehäuse (51) verbunden ist;
der Kältemittelsensor (31), das Sekundärgehäuse (55) und der Ventilkörper (1) gestapelt und in der Stapelrichtung miteinander verbunden sind, wobei eines von Sekundärgehäuse (55) und Kältemittelsensor (31) zwischen dem Ventilkörper (1) und dem anderen von Sekundärgehäuse (55) und Kältemittelsensor (31) eingeklemmt ist.

2. Elektronisches Expansionsventil nach Anspruch 1, **dadurch gekennzeichnet, dass** der Kältemittelsensor (31), das Hauptgehäuse (51) und der Ventilkörper (1) gestapelt und in der Stapelrichtung miteinander verbunden sind, wobei eines von Hauptgehäuse (51) und Kältemittelsensor (31) zwischen dem Ventilkörper (1) und dem anderen von Hauptgehäuse (51) und Kältemittelsensor (31) eingeklemmt ist.

3. Elektronisches Expansionsventil nach Anspruch 2, **dadurch gekennzeichnet, dass** das elektronische Expansionsventil (92, 94) ferner ein Sensorverbindungselement (71) umfasst; und der gestapelte Kältemittelsensor (31), das Hauptgehäuse (51) und der Ventilkörper (1) mittels des Sensorverbindungselements (71) miteinander verbunden sind.

4. Elektronisches Expansionsventil nach Anspruch 2, **dadurch gekennzeichnet, dass** das Hauptgehäuse (51) ein Sensorloch (51c) aufweist, wobei das Sensorloch (51c) mit dem Hauptsteuerhohlraum (51a) in Verbindung steht und der Kältemittelsensor (31) durch das Sensorloch (51c) verläuft,
wobei ein Teil des Kältemittelsensors (31) im Hauptsteuerhohlraum (51a) angeordnet und mit der elektronischen Hauptsteuerplatine (4) elektrisch verbunden ist; und ein anderer Teil des Kältemittelsensors (31) außerhalb des Hauptsteuerhohlraums (51a) angeordnet ist und zum Prüfen von Kältemittel im zweiten Kältemittelkanal (12) konfiguriert ist.

5. Elektronisches Expansionsventil nach Anspruch 4, **dadurch gekennzeichnet, dass** der Teil des Kältemittelsensors (31), der sich im Hauptsteuerhohlraum (51a) befindet, fest an das Hauptgehäuse (51) gepresst ist.

6. Elektronisches Expansionsventil nach Anspruch 1, **dadurch gekennzeichnet, dass** das elektronische Expansionsventil (92, 94) ferner ein Sensorverbindungselement (76) umfasst; und der gestapelte Kältemittelsensor (31), das Sekundärgehäuse (55) und der Ventilkörper (1) mittels des Sensorverbindungselements (76) miteinander verbunden sind.

7. Elektronisches Expansionsventil nach Anspruch 1, **dadurch gekennzeichnet, dass** das Sekundärgehäuse (55) einen Sekundärsteuerhohlraum (55a) und ein Sensorloch (55b) aufweist, wobei das Sensorloch (55b) mit dem Sekundärsteuerhohlraum (55a) in Verbindung steht und der Kältemittelsensor (31) durch das Sensorloch (55b) verläuft,
wobei ein Teil des Kältemittelsensors (31) im Sekundärsteuerhohlraum (55a) angeordnet und mit der elektronischen Hauptsteuerplatine (4) elektrisch verbunden ist; und ein anderer Teil des Kältemittelsensors (31) außerhalb des Sekundärsteuerhohlraums (55a) angeordnet ist und zum Prüfen von Kältemittel im zweiten Kältemittelkanal (12) konfiguriert ist.

8. Elektronisches Expansionsventil nach Anspruch 7, **dadurch gekennzeichnet, dass** das Sekundärgehäuse (55) ferner eine sekundäre Verbindungsöffnung (55c) aufweist, wobei die sekundäre Verbindungsöffnung (55c) mit dem Sekundärsteuerhohlraum (55a) in Verbindung steht; und das Hauptgehäuse (51) eine Hauptverbindungsöffnung (51g) aufweist, wobei die Hauptverbindungsöffnung (51g) mit dem Hauptsteuerhohlraum (51a) in Verbindung steht;
die sekundäre Verbindungsöffnung (55c) so konfiguriert ist, dass sie mit der Hauptverbindungsöffnung (51g) in Verbindung steht, sodass der Sekundärsteuerhohlraum (55a) mit dem Hauptsteuerhohlraum (51a) in Verbindung steht.

9. Wärmemanagementsystem, umfassend einen Wärmetauscher (95), wobei der Wärmetauscher (95) einen ersten Wärmetauscherkanal (95a) und einen zweiten Wärmetauscherkanal (95b) aufweist, wobei der erste Wärmetauscherkanal (95a) und der zweite Wärmetauscherkanal (95b) nicht miteinander in Verbindung stehen, **dadurch gekennzeichnet, dass** das Wärmemanagementsystem ferner das elektronische Expansionsventil (94) nach einem der Ansprüche 1 - 8 umfasst, wobei das elektronische Expansionsventil (94) am Wärmetauscher (95) montiert ist und das elektronische Expansionsventil (94) mit dem ersten Wärmetauscherkanal (95a) in Verbindung steht.

## Revendications

1. Un détendeur électronique, comprenant :
un corps de vanne (1), le corps de vanne (1) ayant une première entrée de fluide frigorigène (1a), une première sortie de fluide frigorigène (1b), une deuxième entrée de fluide frigorigène (1c) et une deuxième sortie de fluide frigorigène (1d), dans lequel un premier canal de fluide frigorigène (11) est formé entre la première entrée de fluide frigorigène (1a) et la première sortie de fluide frigorigène (1b), et un deuxième canal de fluide frigorigène (12) est formé entre la deuxième entrée de fluide frigorigène (1c) et la deuxième sortie de fluide frigorigène (1d) ;
un ensemble vanne (2), pour étrangler le fluide frigorigène dans le premier canal de fluide frigorigène (11) ;
un capteur de fluide frigorigène (31), pour tester le fluide frigorigène dans le deuxième canal de fluide frigorigène (12) ;
une carte de commande électronique principale (4), connectée électriquement à l'ensemble vanne (2) et au capteur de fluide frigorigène (31) séparément ;
dans lequel le détendeur électronique (92, 94) comprend en outre :
un ensemble boîtier (5), comprenant un boîtier principal (51), le boîtier principal (51) ayant une cavité de commande principale (51a), la carte de commande électronique principale (4) étant disposée dans la cavité de commande principale (51a), et le capteur de fluide frigorigène (31) étant pressé fermement contre l'ensemble boîtier (5),
**caractérisé**
**en ce que** l'ensemble boîtier (5) comprend en outre un boîtier secondaire (55), le boîtier secondaire (55) étant connecté de manière amovible au boîtier principal (51) ;
le capteur de fluide frigorigène (31), le boîtier secondaire (55) et le corps de vanne (1) sont empilés et connectés ensemble dans la direction d'empilement, dans lequel l'un du boîtier secondaire (55) et du capteur de fluide frigorigène (31) est serré entre le corps de vanne (1) et l'autre du boîtier secondaire (55) et du capteur de fluide frigorigène (31).

2. Le détendeur électronique selon la revendication 1, **caractérisé en ce que** le capteur de fluide frigorigène (31), le boîtier principal (51) et le corps de vanne (1) sont empilés et connectés ensemble dans la direction d'empilement, dans lequel l'un du boîtier principal (51) et du capteur de fluide frigorigène (31) est serré entre le corps de vanne (1) et l'autre du boîtier principal (51) et du capteur de fluide frigorigène (31).

3. Le détendeur électronique selon la revendication 2, **caractérisé en ce que** le détendeur électronique (92, 94) comprend en outre un élément de connexion de capteur (71) ; et le capteur de fluide frigorigène (31), le boîtier principal (51) et le corps de vanne (1) empilés sont connectés ensemble au moyen de l'élément de connexion de capteur (71).

4. Le détendeur électronique selon la revendication 2, **caractérisé en ce que** le boîtier principal (51) a un trou de capteur (51c), le trou de capteur (51c) étant en communication avec la cavité de commande principale (51a), et le capteur de fluide frigorigène (31) passant à travers le trou de capteur (51c),
dans lequel une partie du capteur de fluide frigorigène (31) est située dans la cavité de commande principale (51a) et connectée électriquement à la carte de commande électronique principale (4) ; et une autre partie du capteur de fluide frigorigène (31) est située à l'extérieur de la cavité de commande principale (51a) et est configurée pour tester le fluide frigorigène dans le deuxième canal de fluide frigorigène (12).

5. Le détendeur électronique selon la revendication 4, **caractérisé en ce que** la partie du capteur de fluide frigorigène (31) qui est située dans la cavité de commande principale (51a) est pressée fermement contre le boîtier principal (51).

6. Le détendeur électronique selon la revendication 1, **caractérisé en ce que** le détendeur électronique (92, 94) comprend en outre un élément de connexion de capteur (76) ; et le capteur de fluide frigorigène (31), le boîtier secondaire (55) et le corps de vanne (1) empilés sont connectés ensemble au moyen de l'élément de connexion de capteur (76).

7. Le détendeur électronique selon la revendication 1, **caractérisé en ce que** le boîtier secondaire (55) a une cavité de commande secondaire (55a) et un trou de capteur (55b), le trou de capteur (55b) étant en communication avec la cavité de commande secondaire (55a), et le capteur de fluide frigorigène (31) passant à travers le trou de capteur (55b),
dans lequel une partie du capteur de fluide frigorigène (31) est située dans la cavité de commande secondaire (55a) et connectée électriquement à la carte de commande électronique principale (4) ; et une autre partie du capteur de fluide frigorigène (31) est située à l'extérieur de la cavité de commande secondaire (55a) et est configurée pour tester le fluide frigorigène dans le deuxième canal de fluide frigorigène (12).

8. Le détendeur électronique selon la revendication 7, **caractérisé en ce que** le boîtier secondaire (55) a en outre une ouverture de connexion secondaire (55c), l'ouverture de connexion secondaire (55c) étant en communication avec la cavité de commande secondaire (55a) ; et le boîtier principal (51) a une ouverture de connexion principale (51g), l'ouverture de connexion principale (51g) étant en communication avec la cavité de commande principale (51a) ;
l'ouverture de connexion secondaire (55c) est configurée pour être en communication avec l'ouverture de connexion principale (51g), de sorte que la cavité de commande secondaire (55a) soit en communication avec la cavité de commande principale (51a).

9. Un ensemble de gestion thermique, comprenant un échangeur de chaleur (95), l'échangeur de chaleur (95) ayant un premier canal d'échange de chaleur (95a) et un deuxième canal d'échange de chaleur (95b), le premier canal d'échange de chaleur (95a) et le deuxième canal d'échange de chaleur (95b) n'étant pas en communication l'un avec l'autre, **caractérisé en ce que** l'ensemble de gestion thermique comprend en outre le détendeur électronique (94) selon l'une quelconque des revendications 1 à 8, le détendeur électronique (94) étant monté sur l'échangeur de chaleur (95), dans lequel le détendeur électronique (94) est en communication avec le premier canal d'échange de chaleur (95a).
